# EUROPEAN PATENT SPECIFICATION

(11) **EP 0 515 221 B1**
(45) Date of publication and mention of the grant of the patent: **09.09.1998**
(21) Application number: 92304681.7
(22) Date of filing: 22.05.1992
(51) Int. Cl.: B32B 15/06, B32B 25/04, C08K 5/37, C08L 27/12

(54) **Rubber composite**
Kautschukverbundstoffe
Matériau composite en caoutchouc

(30) Priority: 23.05.1991 JP 147901/91
(43) Date of publication of application: 25.11.1992
(73) Proprietor: NIPPON ZEON CO., LTD., Tokyo (JP)
(72) Inventor: Mori, Kunio, Morioka-shi, Iwate-ken (JP); Hosoya, Kiypshi, Yokohama-shi, Kanagawa-ken (JP)
(74) Representative: Perry, Robert Edward

(56) References cited:
- GB-A- 2 231 874
- DATABASE WPIL Section Ch, Week 8522, Derwent Publications Ltd., London, GB; Class A, AN 85-130877 & JP-A-60 067 149 (NIPPON ZEON CO. LTD.) 17 April 1985
- PATENT ABSTRACTS OF JAPAN 13 August 1985 & JP-A-60 065 048 ( NIPPON ZEON CO. LTD. ) 13 April 1985

## Description

This invention relates to a composite comprised of a cured fluororubber composition and a nickel or a nickel-plated metal article.

Composites comprised of a fluororubber and a metal article are widely used as functional parts such as valves, oil seals and bearing seals. However, a fluororubber has a poor adhesion to a metal article, and therefore, an adhesive is used for the manufacture of these functional parts. The use of an adhesive has a problem such that these parts are generally small in size and the coating of the adhesive is troublesome and requires many hands, and thus, the productivity is low. Especially, steel articles are plated with nickel for corrosion prevention, and fluororubbers have a poor adhesion to the nickel-plated steel articles.

A primary object of the invention is to provide a rubber composite comprised of a cured fluororubber composition and a nickel article or a nickel-plated metal article, wherein the fluororubber composition is strongly adhered to the nickel or nickel-plated metal article without any adhesive interposed therebetween.

In accordance with the present invention, there is provided a cured rubber composite comprised of a nickel article or a nickel-plated metal article and a cured rubber layer derived from a curable rubber composition and adhered onto the nickel article or nickel-plated metal article, said curable rubber composition comprising a fluororubber and a quaternary ammonium salt derivative of a triazine thiol, represented by the following formula: 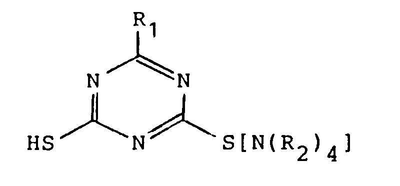 wherein R₁ is -SH, -OR', -SR', -NHR' or -N(R')₂ where R' is an alkyl group having 1 to 20 carbon atoms, an alkenyl group having 2 to 20 carbon atoms, a phenyl group, an aralkyl group having 7 to 20 carbon atoms or a cycloalkyl group having 3 to 20 carbon atoms; and R₂ independently represents a group selected from those which are listed for the R'.

The fluororubber used in the present invention may be conventional and includes, for example, homopolymers of unsaturated fluorine-containing monomers such as tetrafluoroethylene, hexafluoropropylene, trifluorochloroethylene, vinyl fluoride, vinylidene fluoride and perfluorovinyl ether, copolymers of these unsaturated fluorine-containing monomers, and copolymers of these unsaturated fluorinecontaining monomers with copolymerizable monomers.

The quaternary ammonium salt derivative of a triazine thiol represented by the above formula is prepared by reacting a triazine thiol compound with a quaternary ammonium salt in the presence of an alkali.

The triazine thiol compound used includes di- and tri-thiol-s-triazines. As specific examples of the di-and tri-thiol-s-triazines, there can be mentioned, for example, 1,3,5-triazine-2,4,6-trithiol, 6-anilino-1,3,5-triazine-2,4-dithiol, 6-dibutylamino-1,3,5-triazine-2,4-dithiol, 6-diallylamino-1,3,5-triazine-2,4-dithiol and 6-octylamino-1,3,5-triazine-2,4-dithiol.

The quaternary ammonium salt used is not particularly limited and includes those which have various substituents. As specific examples of the quaternary ammonium salt, there can be mentioned tetraethylammonium bromide, tetrabutylammonium chloride, tetrabutylammonium iodide, cetyldimethylethylammonium bromide, cetyl pyridinium chloride, cetyl pyridinium sulfate, trimethylbenzylammonium borate, 1,8-diaza-bicyclo(5,4,0)-undecene-7-methylammonium methosulfate.

The amount of the quaternary ammonium salt derivative of a triazine thiol is preferably 0.01 to 5 parts by weight, more preferably 0.5 to 2 parts by weight, per 100 parts by weight of the fluororubber.

The curable rubber composition used in the present invention may have incorporated therein conventional additives such as a vulcanizer, a processing aid, a reinforcing agent, a filler, a softener, a plasticizer and an age stabilizer. The curable rubber composition can be prepared by kneading together the fluororubber, the quaternary ammonium salt derivative of a triazine thiol and optional additives by a kneading means, for example, a roll or a Banbury mixer.

The layer of the curable rubber composition is formed on a nickel article or a nickel-plated metal article. The kind of metal and the shape of the metal article to be plated with nickel are not particularly limited, and vary depending upon the particular use thereof. The procedure by which the metal is plated with nickel may be either electrical plating or chemical plating.

The cured rubber composite of the invention is made by adhering a shaped article of the curable rubber composition onto the nickel article or nickel-plated article to form a composite, and heating the composite whereby the curable rubber composition is cured. The heating temperature and the heating time are usually 100 to 250°C and 1 minute to 1 hour, respectively.

The invention will now be specifically described by the following examples that by no means limit the scope of the invention. In the examples, % is by weight unless otherwise specified.

### Referential Example 1

### Synthesis of Tetrabutyl Ammonium Salt of Triazine Thiol

Trithiol-s-triazine, and equimolar amounts of sodium hydroxide and tetrabutylammonium bromide are incorporated in deionized water and the mixture was maintained at 50°C to effect reaction. The precipitate thus formed was recrystallized from ethanol to give a tetrabutylammonium dithiol-s-triazine. The yield was 67.1%.

### Referential Example 2

### Preparation of Nickel-Plated Metal Sheet

An iron sheet was plated with nickel by an ordinary chemical plating procedure. Namely, an iron sheet was degreased by using trichloroethylene and an alkali degreasing agent, washed with water, treated with a metal activator, again washed `with water, and then subjected to chemical plating with nickel. The chemical plating was effected in a plating bath containing hypophosphorous acid as a reducing agent. The nickel-plated iron sheet was washed with methanol and then air-dried.

### Example 1

A fluororubber sheet having a thickness of 2 mm was prepared from rubber formulation ingredients shown in Table 1.

**Table 1**

| Curable Rubber Formulations | | | | |
|---|---|---|---|---|
| Formulation ingredients | Comparative Examples | | | Invention |
| | Run 1 | Run 2 | Run 3 | Run 4 |
| Tecnoflon NM *1 | 100 | 100 | 100 | 100 |
| MgO #150 | 3 | 3 | 3 | 3 |
| Ca(OH)₂ | 6 | 6 | 6 | 6 |
| MT carbon | 20 | 20 | 20 | 20 |
| Tecnoflon M1 *2 | 3.7 | - | - | - |
| Tecnoflon M2 *3 | 1.5 | - | - | - |
| Zinsnet F *4 | - | 1 | 1 | - |
| TBA-Cl *5 | - | 1 | - | - |
| TBA-Br *6 | - | - | 1 | - |
| ETBA *7 | - | - | - | 1 |

| | | | | |
|---|---|---|---|---|
| *1 Vinylidene fluoride/hexafluoropropylene copolymer, supplied by Monte Fluos | | | | |
| *2 Bisphenol type curing agent, supplied by Monte Fluos | | | | |
| *3 Organic phosphoric acid curing agent, supplied by Monte Fluos | | | | |
| *4 Trithiol-s-trazine | | | | |
| *5 Tetrabutylammonium chloride | | | | |
| *6 Tetrabutylammonium bromide | | | | |
| *7 Tetrabutylammonium dithiol-s-triazine | | | | |

The thus prepared fluororubber sheet and the nickel-plated iron sheet prepared in Referential Example 2 were superposed upon another, and press-cured by using a mold at a temperature of 170°C and a pressure of 80 kg/cm² for 10 or 30 minutes to prepare a primarily cured rubber composite. The primarily cured rubber composite was further cured at a temperature of 200°C for 24 hours to prepare a secondarily cured rubber composite.

The uncured fluororubber sheet was subjected to a primary curing and then a secondary curing under the same conditions as mentioned above. Tensile properties and hardness of the primarily cured fluororubber sheet and the secondarily cured fluororubber sheet were evaluated according to Japanese Industrial Standard (JIS) K6301. The results are shown in Table 2.

Peeling strengths of the primarily cured rubber composite and the secondarily cured rubber composite were evaluated according to JIS K6301 wherein the pulling rate was 50 mm/min. The results are shown in Table 2.

As seen from Table 2, the peeling strength between the cured fluororubber composition and the nickel-plated metal article in the cured rubber composite of the invention (Run 4), which was prepared by using a quaternary ammonium salt derivative of a triazine thiol, is much higher than those in the cured rubber composites (Run 2 and Run 3), which were prepared by using the triazine thiol compound and the quaternary ammonium salt separately, i.e., without reaction of these compounds.

The rubber composite of the invention is useful especially for sealing members composed of a rubber adhered onto a metal article, for which rubber good oil resistance and thermal resistance are required.

**Table 2**

| Properties of Cured Fluororubber Sheets and Composites | | | | |
|---|---|---|---|---|
| | Comparative Examples | | | Invention |
| | Run 1 | Run 2 | Run 3 | Run 4 |
| | | | | |

| Tensile Properties of Primarily Cured Fluororubber Sheets | | | | |
|---|---|---|---|---|
| Cured at 170°C for: | 10 min. | 30 min. | 30 min. | 30 min. |
| Tensile strength (kgf/cm²) | 103 | 126 | 123 | 128 |
| Elongation (%) | 270 | 290 | 310 | 330 |
| Tensile stress at 100% elongation (kgf/cm²) | 35 | 40 | 39 | 38 |
| Tensile stress at 200% elongation (kgf/cm²) | 79 | 87 | 80 | 79 |
| Hardness (JIS A) | 67 | 69 | 65 | 64 |

| Tensile Properties of Secondarily Cured Fluororubber Sheets | | | | |
|---|---|---|---|---|
| Cured at 200°C for 24 hours | | | | |
| Tensile strength (kgf/cm²) | 122 | 144 | 147 | 168 |
| Elongation (%) | 220 | 210 | 220 | 240 |
| Tensile stress at 100% elongation (kgf/cm²) | 46 | 51 | 50 | 57 |
| Tensile stress at 200% elongation (kgf/cm²) | 110 | 134 | 130 | 140 |
| Hardness (JIS A) | 66 | 70 | 67 | 68 |

| Peeling Test of Primarily Cured Composite | | | | |
|---|---|---|---|---|
| Peeling strength (kgf/cm) | 0 | 2.1 | 1.6 | 9.1 |
| Peeled state | Separated at interface | Rubber ruptured | Rubber ruptured | Rubber ruptured |

| Peeling Test of Secondarily Cured Composite | | | | |
|---|---|---|---|---|
| Peeling strength (kgf/cm) | 0 | 1.0 | 1.5 | 5.5 |
| Peeling state | Separated at interface | Rubber ruptured | Rubber ruptured | Rubber ruptured |

## Claims

1. A cured rubber composite comprised of a nickel article or a nickel-plated metal article and a cured rubber layer derived from a curable rubber composition and adhered onto the nickel article or the nickel-plated metal article, said curable rubber composition comprising a fluororubber and a quaternary ammonium salt derivative of a triazine thiol, represented by the following formula: 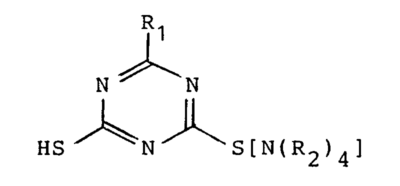 wherein R₁ is -SH, -OR', -SR', NHR' or -N(R')₂ where R' is an alkyl group having 1 to 20 carbon atoms, an alkenyl group having 2 to 20 carbon atoms, a phenyl group, an aralkyl group having 7 to 20 carbon atoms or a cycloalkyl group having 3 to 20 carbon atoms; and R₂ independently represents a group selected from those which are listed for the R'.

2. A rubber composite according to claim 1, wherein the amount of the quaternary ammonium salt derivative of a triazine thiol is 0.01 to 5 parts by weight per 100 parts by weight of the fluororubber.

3. A rubber composite according to claim 1 or 2, wherein the amount of the quaternary ammonium salt derivative of a triazine thiol is 0.5 to 2 parts by weight per 100 parts by weight of the fluororubber.

4. A rubber composite according to any of claims 1 to 3, wherein the quaternary ammonium salt derivative of a triazine thiol is prepared by reacting a di- or tri-thiol-triazine with a quaternary ammonium salt; said di-or tri-thiol-triazine being selected from the group consisting of 1,3,5-triazine-2,4,6-trithiol, 6-anilino-1,3,5-triazine-2,4-dithiol, 6-dibutylamino-1,3,5-triazine-2,4-dithiol, 6-diallylamino-1,3,5-triazine-2,4-dithiol and 6-octylamino-1,3,5-triazine2,4-dithiol, and said quaternary ammonium salt being selected from the group consisting of tetraethylamonium bromide, tetrabutylammonium chloride, tetrabutylammonium iodide, cetyldimethylethylammonium bromide, cetyl pyridinium chloride, cetyl pyridinium sulfate, trimethylbenzylammonium borate and 1,8-diaza-bicyclo(5,4,0)-undecene-7-methyl-ammonium methosulfate.

5. A rubber composite according to any of claims 1 to 4, wherein the fluororubber is a homopolymer of an unsaturated fluorine-containing monomer, a copolymer of unsaturated fluorine-containing monomers or a copolymer of an unsaturated fluorine-containing monomer with a copolymerizable monomer; said unsaturated fluorine-containing monomers being selected from the group consisting of tetrafluoroethylene, hexafluoropropylene, trifluorochloroethylene, vinyl fluoride, vinylidene fluoride and perfluorovinyl ether.

## Patentansprüche

1. Gehärteter bzw. vulkanisierter Kautschukverbundwerkstoff, umfassend einen Nickelgegenstand oder einen niokelplattierten Metallgegenstand und eine gehärtete bzw. vulkanisierte Kautschukschicht, abgeleitet von einer härtbaren bzw. vulkanisierbaren Kautschukmasse, die auf den Nickelgegenstand oder den nickelplattierten Metallgegenstand aufgeklebt ist, wobei die härtbare bzw. vulkanisierbare Kautschukmasse einen Fluorkautschuk und ein quarternäres Ammoniumsalzderivat eines Triazinthiols der folgenden Formel 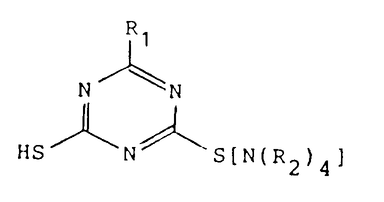 worin R₁ für -SH, -OR', -SR', -NHR' oder -N(R')₂ steht, wobei R' eine Alkylgruppe mit 1 bis 20 Kohlenstoffatomen, eine Alkenylgruppe mit 2 bis 20 Kohlenstoffatomen, eine Phenylgruppe, eine Aralkylgruppe mit 7 bis 20 Kohlenstoffatomen oder eine Cycloalkylyruppe mit 3 bis 20 Kohlenstoffatomen ist; und R₂ unabhängig für eine Gruppe steht, die aus den für R' angegebenen Gruppen ausgewählt ist, umfaßt.

2. Kautschukverbundwerkstoff nach Anspruch 1, dadurch **gekennzeichnet,** daß die Menge des quarternären Ammoniumsalzderivats des Triazinthiols 0,01 bis 5 Gewichtsteile pro 100 Gewichtsteile Fluorkautschuk beträgt.

3. Kautschukverbundwerkstoff nach Anspruch 1 oder 2, dadurch **gekennzeichnet,** daß die Menge des quarternären Ammoniumsalzderivats des Triazinthiols 0,5 bis 2 Gewichtsteile pro 100 Gewichtsteile Fluorkautschuk beträgt.

4. Kautschukverbundwerkstoff nach einem der Ansprüche 1 bis 3, dadurch **gekennzeichnet,** daß das quarternäre Ammoniumsalzderivat des Triazinthiols durch Umsetzung eines Di- oder Trithioltriazins mit einem quarternären Ammoniumsalz hergestellt worden ist; wobei das Di- oder Trithioltriazin aus der Gruppe bestehend aus 1,3,5-Triazin-2,4,6-trithiol, 6-Anilino-1,3,5-triazin-2,4-dithiol, 6-Dibutylamino-1,3,5-triazin-2,4-dithiol, 6-diallylamino-1,3,5-triazin-2,4-dithiol und 6-Oktylamino-1,3,5-triazin-2,4-dithiol ausgewählt worden ist und das quarternäre Ammoniumsalz aus der Gruppe bestehend aus Tetraethylammoniumbromid, Tetrabutylammoniumchlorid, Tetrabutylammoniumiodid, Cetyldimethylethylammoniumbromid, Cetylpyridinumchlorid, Cetylpyridinumsulfat, Trimethylbenzylammoniumborat und 1,8-Diazabicyclo(5,4,0)-undecen-7-methylammoniummethosulfat ausgewählt worden ist.

5. Kautschukverbundwerkstoff nach einem der Ansprüche 1 bis 4, dadurch **gekennzeichnet,** daß der Fluorkautschuk ein Homopolymeres eines ungesättigten, Fluor enthaltenden Monomoren, ein Copolymeres von ungesättigten, Fluor enthaltenden Monomeren oder ein Copolymeres eines ungesättigten, Fluor enthaltenden Monomeren mit einem copolymerisierbaren Monomeren ist, wobei die ungesättigten, Fluor enthaltenden Monomere aus der Gruppe bestehend aus Tetrafluorethylen, Hexafluorpropylen, Trifluorchlorethylen, Vinylfluorid, Vinylidenfluorid und Perfluorvinylether ausgewählt worden sind.

## Revendications

1. Matériau composite à base de caoutchouc durci, composé d'un objet en nickel ou d'un objet métallique revêtu de nickel et d'une couche de caoutchouc durcie provenant d'une composition de caoutchouc durcissable et que l'on a fait adhérer sur l'objet en nickel ou sur l'objet métallique revêtu de nickel, ladite composition de caoutchouc durcissable comprenant un caoutchouc fluoré et un dérivé du type sel d'ammonium quaternaire d'un triazine thiol, représenté par la formule suivante: 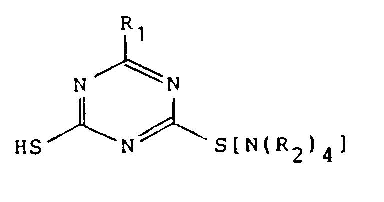 dans laquelle R₁ est -SH, -OR', -SR', -NHR' ou -N(R')₂, où R' est un groupe alkyle ayant 1 à 20 atomes de carbone, un groupe alcényle ayant 2 à 20 atomes de carbone, un groupe phényle, un groupe aralkyle ayant 7 à 20 atomes de carbone ou un groupe cycloalkyle ayant 3 à 20 atomes de carbone; et R₂ représente indépendamment un groupe choisi parmi ceux gui sont donnés pour R'.

2. Matériau composite à base de caoutchouc selon la revendication 1, dans lequel la quantité du dérivé du type sel d'ammonium quaternaire d'un triazine thiol est de 0,01 à 5 parties en poids pour 100 parties en poids du caoutchouc fluoré.

3. Matériau composite à base de caoutchouc selon la revendication 1 ou 2, dans lequel la quantité du dérivé du type sel d'ammonium quaternaire d'un triazine thiol est de 0,5 à 2 parties en poids pour 100 parties en poids du caoutchouc fluoré.

4. Matériau composite à base de caoutchouc selon l'une quelconque des revendications 1 à 3, dans lequel le dérivé du type sel d'ammonium quaternaire d'un triazine thiol est préparé en faisant réagir une di- ou tri-thiol-triazine avec un sel d'ammonium quaternaire; ladite di- ou tri-thiol-triazine étant choisie dans le groupe constitué du 1,3,5-triazine-2,4,6-trithiol, du 6-anilino-1,3,5-triazine-2,4-dithiol, du 6-dibutylamino-1,3,5-triazine-2,4-dithiol, du 6-diallylamino-1,3,5-triazine-2,4-dithiol et du 6-octylamino-1,3,5-triazine-2,4-dithiol, et ledit sel d'ammonium quaternaire étant choisi dans le groupe constitué du bromure de tétraéthylammonium, du chlorure de tétrabutylammonium, de l'iodure de tétrabutylammonium, du bromure de cétyldiméthyléthylammonium, du chlorure de cétyl pyridinium, du sulfate de cétyl pyridinium, du borate de triméthylbenzylammonium et du méthosulfate de 1,8-diaza-bicyclo-(5,4,0)-undécène-7-méthyl-ammonium.

5. Matériau composite à base de caoutchouc selon l'une quelconque des revendications 1 à 4, dans lequel le caoutchouc fluoré est un homopolymère d'un monomère insaturé contenant du fluor, un copolymère de monomères insaturés contenant du fluor ou un copolymère d'un monomère insaturé contenant du fluor avec un monomère copolymérisable; lesdits monomères insaturés contenant du fluor étant choisis dans le groupe constitué du tétrafluoroéthylène, de l'hexafluoropropylène, du trifluorochloroéthylène, du fluorure de vinyle, du fluorure de vinylidène et de l'éther de perfluorovinyle.
